Europäisches Patentamt

European Patent Office

Office européen des brevets

(19)

(11) Publication number: **0 199 175 B1**

(12) **EUROPEAN PATENT SPECIFICATION**

(45) Date of publication of the patent specification:
14.03.90

(51) Int. Cl.⁴: **H01M 4/02, H01M 4/36**

(21) Application number: 86104751.2

(22) Date of filing: 08.04.86

(54) Negative electrodes for non-aqueous secondary batteries composed of conjugated polymer and alkali metal alloying or inserting material.

(30) Priority: 19.04.85 US 725261
18.07.85 US 756858
05.08.85 US 762357

(43) Date of publication of application:
29.10.86 Bulletin 86/44

(45) Publication of the grant of the patent:
14.03.90 Bulletin 90/11

(84) Designated Contracting States:
DE FR GB IT NL

(56) References cited:
EP-A- 0 139 756
DE-A- 3 230 410
GB-A- 2 134 125

PATENTS ABSTRACTS OF JAPAN, vol. 9,
no. 102 (E-312)[1825], 4th May 1985; &
JP-A-59 228 370 (MATSUSHITA DENKI SANGYO
K.K.) 21-12-1984
PATENTS ABSTRACTS OF JAPAN, vol. 7,
no. 218 (E-200)[1363], 28th September 1983; &
JP-A-58 111 275 (SANYO DENKI K.K.) 02-07-1983
PATENTS ABSTRACTS OF JAPAN, vol. 7,
no. 218 (E-200)[1363], 28th September 1983; &
JP-A-58 111 276 (SANYO DENKI K.K.) 02-07-1983

(73) Proprietor: ALLIED-SIGNAL INC. (a Delaware
corporation), Columbia Road and Park Avenue P.O.
Box 2245R, Morristown New Jersey 07960(US)

(72) Inventor: Schacklette, Lawrence Wayne, 11 Alden Place,
Maplewood New Jersey 07040(US)
Inventor: Jow, Taiguang Richard, 101 Ormont Road,
Chatham Township New Jersey 07928(US)
Inventor: Toth, James Edward, 45 Essex Avenue,
Maplewood New Jersey 07040(US)
Inventor: Maxfield, MacRae, 30 Rockview Avenue, North
Plainfield New Jersey 07060(US)
Inventor: Gould, Sharon, 37 Meadowbrook Road,
Maplewood New Jersey 07040(US)

(74) Representative: Brock, Peter William et al,
URQUHART-DYKES & LORD 91 Wimpole Street, London
W1M 8AH(GB)

(56) References cited: (continuation)
PATENTS ABSTRACTS OF JAPAN, vol. 7,
no. 251 (E-209)[1396], 8th November 1983; &
JP-A-58 137 975 (SANYO DENKI K.K.) 16-08-1983

## Description

This invention relates to polymeric electrodes. More particularly, this invention relates to negative electrodes for non-aqueous secondary batteries composed of conjugated backbone polymers and alkali metal alloying or alkali metal ion inserting materials.

Conjugated backbone polymers, e.g., polyacetylene, polyphenylene, polyacenes, polythiophene, poly(phenylene vinylene), polyazulene, poly(phenylene sulfide), poly(phenylene oxide), polythianthrene, poly(phenylquinoline), polyaniline, polythiophene, and polypyrrole, have been suggested for use in a variety of applications based upon their characteristic of becoming conductive when oxidized or reduced either chemically or electrochemically. The secondary battery application described by, e.g., MacDiarmid et al. in US-A 4 321 114; J. de Physique, Colloque C3, Vol. 44 (1983), articles beginning on page 579, page 615 and page 537; and K. Kaneto et al., Japanese J. of Applied Physics, Vol. 22, pp. L567-L568 (September 1983) and pp. L412-L414 (July 1983), employs one or more electrodes having conjugated backbone polymers as the electroactive material. Such electrodes can, for example, be reversibly complexed with alkali metal or tetraalkylammonium cations during battery cycling, most commonly with insertion of cations into a polymer anode (the negative battery electrode) occurring during charging. The more such cations are inserted, the more conductive the electrode becomes and the more cathodic the potential of the anode becomes.

Lithium and lithium alloys have been suggested for use on the negative electrode of electrochemical cells. For example, US-A 40 022 492 discloses electrochemical cells having an anode consisting essentially of lithium aluminum alloys that contain lithium in amounts between 63% and 92% and the balance essentially aluminium. Anodes composed of lithium and aluminum are also disclosed in Rao, et al., J. Electrochem. Soc. 124, 1490 (1977), and Besenhard, J. Electroanal. Chem., 94, 77 (1978).

EP-A 0 070 107; Murphy et al., J. Electrochem. Soc., 126, 349 (1979) and Murphy et al., Mat. Res. Bull., 13, 1395 (1978) disclose batteries based on lithium intercalation in layered dichalcogenides.

Composite structures of a conjugated backbone polymer and a non-electroactive material have been described in US-A 4 294 304 and in the above J. de Physique issue, articles beginning on page 137 and on page 151. Representative other components that have been blended with polyacetylene or onto which polyacetylene or polypyrrole have been deposited include polyethylene, polystyrene, graphite, carbon black, NESA glass and silicon. In selected instances, such composite structures have been suggested for use in batteries, see Showa Denko K.K., EP-A 76 119.

J. O. Besenhard and G. Eichinger, J. Electroanal. Chem., 78, I (1976), at pages 8 and 9 describe the difficulty of redepositing sodium metal at room temperature from non-aqueous solutions.

While batteries have heretofore been constructed in which a conjugated backbone polymer is the electroactive material, such batteries suffer from a number of disadvantages. For example, such cells have heretofore exhibited strongly varying discharge potentials. Moreover, such cells have relatively low volumetric energy densities.

Batteries to be used at room temperature constructed with anodes composed of alkali metal alloys, such as lithium/aluminium alloys, also suffer from a number of disadvantages. For example, such batteries have exhibited relatively low capacity (utilization), low rate capability and poor cycle life.

Generally speaking, the present invention obviates one or more of the disadvantages of the prior art polymer batteries or alloy anode batteries by providing a battery which comprises:

(a) an electrolyte comprising an alkali metal-salt;
(b) a cathode; and
(c) an anode comprising an anode active material.

According to the invention, the anode active material is a mixture comprising one or more conjugated backbone polymers and one or more electroactive materials selected from metals capable of alloying with the alkali metal in said electrolyte and transition metal chalcogenides. The electrolyte can be a solution of the alkali metal salt in an organic solvent, or it may be a molten alkali metal salt.

The alkali-metal cations in said electrolyte are introduced into said anode as a metal alloy or as an inserted ion in said transition metal chalcogenide during the charging of said battery.

As an essential component, the battery of this invention includes an anode which comprises a unique anode active material. One unique anode active material useful in the battery of this invention comprises a mixture of one or more conjugated backbone polymers or copolymers, or blends of one or more conjugated polymers or copolymers with one or more conjugated or non-conjugated backbone polymers or copolymers (hereinafter referred to collectively as "conjugated backbone polymer"), which polymers, copolymers or blends contain an effective amount of one or more other potential electroactive materials selected from metals which are capable of alloying with alkali metals and transition metal chalcogenides. The structure of this anode can be varied widely. For example, the anode can be in the form of an intimate mixture of compressed powders. Alternatively, the anode can be in the form of a film of the conjugated backbone polymer impregnated with the other component in finely divided form, or in the form of a composite layered structure in which one of the components is a core structure encapsulated by and in intimate contact with the other component. In the preferred embodiments, the anode is in the form of an intimate mixture of compressed powders, or a casting of the polymer having particles of the other electroactive material dispersed therein.

Useful polymers may be any of the variety of conjugated backbone polymers known to those of skill in the art for use as negative electrodes in batteries. Such polymers are preferably conductive in their reduced form and capable of reversibly inserting cation. Useful polymers are also insoluble or substantially insoluble in the electrolyte (i.e., preferably a solubility equal to or less than 500 ppm). Useful conjugated backbone polymers may be conjugated backbone homopolymers or copolymers, or blends of one or more conjugated backbone homopolymers or copolymers with one or more conjugated backbone or non-conjugated backbone homopolymers or copolymers. Useful conjugated backbone polymers can vary widely and include polyacetylene, polyphenylene, (if in the para form), poly(phenylene vinylene) and the like, and blends thereof with other polymers having either conjugated or non-conjugated backbones, such as polyethylene. Other conjugated backbone polymers claimed by others as useful in batteries may also be used in the present invention. Such polymers include polythiophene, polyazulene, poly(phenylquinoline), polyacenes, polyacenediyls, polynaphthalene, and the like and polymeric blends thereof. Amongst these illustrative conjugated backbone polymers, polyacetylene, poly(phenylene vinylene) and poly(p-phenylene) are preferred, and polyacetylene and poly(p-phenylene) are particularly preferred. Most preferred for use in the practice of this invention is polyacetylene.

Useful conjugated backbone polymers are known compounds which can be prepared by conventional means. For example, high quality polyacetylene, a preferred conjugated backbone polymer, can be conveniently prepared by the procedures described in a series of papers by Shirakawa, et al., Polymer Journal, Vol. 2, No. 2, pp. 231-244 (1971); Polymer Journal, Vol. 4, No. 4, pp. 460-462 (1973); Journal of Polymer Science Part A-1, Polymer Chemistry Edition, Vol. 12, pp. 11-20 (1974), and Journal of Polymer Science Part A-1, Polymer Chemistry Edition Vol. 13, pp. 1943-1950 (1975). Moreover, forms of high quality poly(p-phenylene), another preferred conjugated backbone polymer, can be prepared by the method of Kovacic described in detail in J. Am. Chem. Soc. 85, 454-458 (1963). Furthermore, poly(phenylene vinylene), another preferred conjugated backbone polymer, can be prepared by the procedure described in US-A-3404132.

The second essential component of this unique anode material is a material selected from metals or alloys which are capable of alloying with alkali metals, and transition metal chalcogenides. Useful alkali metal alloying metals can vary widely. Illustrative of such useful metals are aluminium, lead, magnesium, tin, bismuth, antimony, silicon, and alloys of these or other metals, such as Al-Si, Al-Mg, Al-Si-Sn, or Wood's Metal (Bi-Pb-Sn-Cd) and the like. The preferred alkali metal alloying metals for use in the practice of this invention are aluminium, lead, tin and alloys thereof. In the particularly preferred embodiments of the invention, aluminium is used for lithium alloying, and lead, tin and tin/lead alloys are used for sodium alloying.

The transition metal chalcogenides are materials into which alkali metal cations can be inserted, as for example, into channels in the material, between layers of the material and the like. Preferred transition-metal chalcogenides include $TiS_2$, $MoO_2$, $WO_2$, $VSe_2$, $FeCuS_2$, and $VS_2$.

The amounts of the various components of the anode material can vary widely, depending on a number of factors, as for example, the balance chosen between electrochemical capacity, and the desired mechanical properties of the anode, electrode, and the like. In general, the amount of the conjugated backbone polymer component in the anode should be sufficient to impart mechanical stability and good cycle life to the electrode. In the preferred embodiments of this aspect of the invention, the amount of the conjugated backbone polymer component may vary from 5 to 75 percent by weight based on the total weight of polymer and other electroactive material in the anode, and in the particularly preferred embodiments up from 20 to 50% by weight on the aforementioned basis.

Similarly, the amount of the other electroactive material in this aspect of the invention (e.g., alkali metal alloying material and/or transition metal chalcogenide) can also vary widely depending on a number of factors, as for example, the balance chosen between electrochemical capacity and the desired mechanical properties of the electrode and the like. Usually the amount of such material varies from 25 to 95 weight percent based on the total weight of conjugated backbone polymer and other electroactive material. In the preferred embodiments of the invention, the amount of the other material may vary from 50 to 80 weight percent on the aforemention basis.

The particular polymer and alloying metal and/or transition metal chalcogenide chosen for use in any particular situation may vary widely. However, in the preferred embodiments of the invention the polymer and other electroactive material are selected such that the range of electroactivity of the polymer encompasses or closely matches that of the other component.

The following table lists exemplary combinations of conjugated backbone polymer and alkali metal alloying metal or transition metal chalcogenide which can be used of the anode.

| POLYMER | POLYMER ELECTRO-ACTIVE RANGE* | ELECTROACTIVE MATERIAL** | ELECTRO-ACTIVE RANGE* |
|---|---|---|---|
| PA, polyacetylene | 0.1 - 1.8V | $Li_xAl$ | ~ 0.2 - 0.5 |
| PPP, polyphenylene | 0.1 - 1.1V | $Li_xMg$ | ~ 0 - 0.2 |
| | | $Na_xPb$ | 0.3 - 0.9 |
| PPQ, poly(phenyl-quinoline) | 1.5V | $Li_xWO_2$ $Li_xMoO_2$ | 0.3 - 1.2V |
| PPV, poly(phenylene vinylene) | <1.7V | $Li_{1+x}TiS_2$ | 0.5 - 0.6 |
| PAZ, polyazulene | *** | $Li_{1+x}VSe_2$ | 1.0 - 1.3 |
| PN, polynaphtha-lenediyl | *** | $Li_xFeCuS_2$ | ~1.5 |

\* Relative to $Li/Li^+$ reference.

\*\* where $0 < x < 1$.

The table shows that a combination of polyacetylene and aluminum (Al), and combinations of poly(phenylene) and the $WO_2$, and poly(phenylquinoline) and $MoO_2$ are combinations of polymers and alloying metal or transition metal chalcogenides which would be expected to provide good results.

The anode used according to this invention comprises a mixture of conjugated backbone polymer and one or more other electroactive material may include other optional materials known to those of skill in the battery art. These materials are known to those of skill in the art and will not be described herein in great detail. In brief, by way of illustrative examples, the anode may include such other substituents as conductivity aids, inert binders, mechanical supports, and the like. However, in the preferred embodiments, the combination of polymer plus other electroactive material is in the major proportion.

The anode comprises a mixture of conjugated backbone polymer and one or more other electroactive material and may also be coated with other materials to allow use of the anode with solvents which would otherwise react with the conjugated backbone polymer in the reduced state. For example, the anode can be coated with the reaction product of an oxirane compound as described in US-A-4472487, with the reaction product of an organsulfur compound as described in US-A-4472489, and with the reaction product of certain cyclic compounds as described in US-A-4472488.

The method of fabricating the anode which comprises a mixture of conjugated backbone polymer and other electroactive material is not critical and can be varied widely. Any method known to those of skill in the art for fabricating composites of polymer and a metal or transition metal chalcogenide can be used. In the preferred embodiments, the anode is composed of an intimate mixture of compressed powders which is prepared through use of the process of this invention. In this process, the anode is fabricated by (1) derivatizing the surface of a finely divided electroactive material selected from alkali metal alloying metals and transition metal chalcogenides with active polymer catalyst for conjugated backbone polymers or a catalyst for polymers which can be converted into a conjugated backbone polymer; (2) dispersing the derivatized electroactive material having a desired small particle size in a suspension or solution of a monomer and/or a precursor of the desired conjugated backbone polymer and polymerizing the monomer and/or precursor in the presence of the dispersed electroactive material and; (3) fabricating a cohesive solid by recovering the polymerization product and derivatized electroactive material from the polymerization mixture from said suspension or solution and compressing same into a powdered composite, or by casting a film of suspension or gel-like composition comprising the polymerization product, and electroactive material.

For substrates having a surface suitable for anchoring polymerization catalysts, the first step of the process is the derivatization of the substrate surface by a component of a catalyst system that is active in polymerization reactions forming conjugated backbone polymers or polymers which can be converted to conjugated backbone polymers. The derivatization is performed by contacting a catalyst component with a substrate whose surface contains reactive functionalities such as oxides, hydroxides, sulfides, hydrogen sulfides and the like. For example, when the substrate consists of a metal, often the surface of the metal possess an oxide hydroxide layer which may react with a suitable catalyst component such as $AlCl_3$, $Ti(O-nBu)_4$, $MoOCl_4$, $MoCl_5$ or $WCl_6$, to yield a metal substrate bonded at the surface via its oxide layer to a modified catalyst component according to the equation:

$$Metal\text{-}OH + AX_m \longrightarrow Metal\text{-}O_n\text{-}AX_{m-n} + HX$$

where, A represents for example a transition metal and X represents for example a halide or an alkoxide.

4

Prior to contacting the derivatized substrate with monomers, the remaining catalyst components are added as neccessary to the derivatized substrate to make a complete catalyst bonded to the substrate.

For those substrates that do not possess a surface layer which reacts with suitable catalyst components and that are not polymerization catalysts themselves, the process requires a pretreatment of the substrate to introduce surface functional groups such oxides, hydroxides, sulfides, carboxylic acids and the like. Reagents for pretreatment include nitric acid, chromic acid, alkali metal hydroxides, alkaline earth metal oxides, alkali metal sulfides, anhydrides and the like. Derivatization of the treated surface can then proceed as above.

For the substrate whose surface is catalytic for polymerization, derivatization is not required and the substrate and the monomers or precursors are merely contacted in a suitable medium. For example, $Na_xCoO_2$, $Li_xCoO_2$, $V_2O_5$, or other high potential transition metal chalcogenides can be contacted with a solution of reactive monomers such as pyrrole or thiophene in the presence of an electrolyte salt to form oxidized polypyrrole or polythiophene on the substrate surface.

In the preferred embodiments of the invention in which the process is used to prepare an anode containing a finely divided electroactive material dispersed in a conjugated backbone polymeric matrix, the substrate is a finely divided metal, alloy or other electroactive material. Preferred metals and alloys include aluminium, lithium-aluminum alloys, lead, tin, tin/lead alloys and other metal and alloys which can alloy with alkali metals. Other useful and preferred electroactive materials which can be used in the manufacture of anodes are the transition metal chalcogenides. Such chalcogenides for use in the practice of this invention can vary widely and include $WO_2$, $MoO_2$, $Li_xTiS_2$, $Li_xVSe_2$, and $Li_xVS_2$ where $1< x <2$.

In these preferred embodiments of the invention, the powdered metal, alloy or other electroactive material generally has an average particle diameter of from 100 µm to 0.05 µm. In the preferred embodiments of the invention, average particle diameter is from 20 µm to 0.1 µm, and in the particularly preferred embodiments is from 0.1 µm to 10 µm. Amongst these particularly preferred embodiments most preferred are those embodiments in which average particle diameter is from 0.1 µm to 5 µm.

In the polymerization step of the process of this the invention, the substrate having a catalytic surface and in a suitable form, as for example, in the form of a finely divided particulate material or large solid substrate is contacted with a gas, suspension or solution of the monomer, monomers or other precursors of the desired conjugated backbone polymer, or other polymer which can be converted into a conjugated backbone polymer after polymerization, if necessary in the presence of a co-catalyst, such as triethylaluminum, tetramethyl tin, tetraphenyl tin and the like. Thereafter the monomer, monomers or precursors are polymerized, forming the polymer on the surface of the substrate anchored thereto through the bonded catalyst.

The polymer-coated substrate may be combined with additional conjugated backbone polymers or polymers which can be converted to a conjugated backbone polymer by blending the polymer-coated substrate with the preformed polymer or by the further polymerization of monomers of the additional polymer by unmodified catalyst in the presence of the polymer-coated substrate. This combination yields a desired ratio of substrate to polymer, and is useful is the fabrication of articles having a continuous conjugated backbone polymer phase containing dispersed substrate. In the preferred embodiments of this invention, the polymerization of monomers or precursors is performed in a mixture of substrates having a catalytic surface and unmodified polymerization catalyst. This combination of steps (b) and (c) yields a composite with good adhesion between substrate and the additional polymer via the polymer coating, as well as the desired weight ratio of substrate to polymer.

The types of monomers or precursors employed will vary widely depending on the desired conjugated backbone polymer. Useful monomers are those which are precursors in the production of conjugated backbone polymers known to those of skill in the art or monomers which form other types of polymers which can be converted into the desired conjugated backbone polymer. Illustrative of monomers used in the formation of polymers which are convertible into conjugated backbone polymers is 7,8-bis(trifluoromethyl)tricyclo[4,2,2]deca-3,7,9-triene whose metathesis polymerization product can be converted to polyacetylene, and monomers which can be polymerized to form poly(5,6-diacetoxycyclohex-2-ene-1,4-diyl) which can be converted to poly(paraphenylene). Mixtures of monomers can be used. For example, various combinations of monomers can be employed to form conjugated backbone copolymers, or blends of one or more conjugated backbone homopolymers or copolymers with one or more conjugated backbone or non-conjugated backbone homopolymers or copolymers. As is apparent from the foregoing, monomers useful in the practice of the method of this invention can vary widely and may include monomers which can be polymerized into unsubstitued and substituted polyacetylene, poly(paraphenylene), poly(phenylquinoline), poly(phenylene vinylene) and the like. Other useful monomers include those which can be polymerized into conjugated backbone polymers claimed by others as useful in batteries such as monomers which form polythiophene, polyazulene, poly(phenylquinoline), polypyrrole, polyacenes, polyaniline, polyacenediyls, polynaphthalene, substituted derivatives, polymeric blends thereof and the like.

Preferred for use in the practice of this invention are monomers which can be directly polymerized to form conjugated backbone polymers useful as battery electrodes, or to form other polymers which can be converted into these conjugated backbone polmers. Conjugated backbone polymers useful as positive electrodes are conductive in their oxidized or reduced form, and are capable of reversibly inserting anions or cations. Amongst these illustrative conjugated backbone polymers, polyacetylene, poly(phenylene vinylene) and poly(p-phenylene) are preferred for use in negative electrodes, and polyacetylene and poly(p-phenylene) are particularly preferred for such use. Accordingly, monomers and other precursors which result in the formation of these polymers are preferred and particularly preferred for use in the practice of this invention, respectively. Most preferred for use in the practice of this invention is polyacetylene and accordingly, acetylene is the most preferred monomer.

In the second step of the method of this invention, the monomer or monomers are polymerized in the presence of the dispersed material. Polymerization reaction conditions for the polymers and precusor polymers described above as well known in the art. For example, useful conditions are described in detail in H. Shirakawa, et al., Polym. J., 2, 231 (1971); J.C.W. Chien, et al., Macromolecules, 14, 497, (1981), (W.J. Feast et al., EP-A 0 080 329), Kovacic, J. Am. Chem. Soc. 85:454-458 (1963), and US-A 3 404 132. The monomer or other precursors undergo coordination polymerization to yield a conjugated backbone polymer or a polymer which can be converted into a conjugated backbone polymer which adheres to the surface of the substrate. Insoluble polymers form particles and/or gels or films nucleated about the substrate having a catalytic surface, as for example particles of derivatized metal, alloy or other electroactive material, and are attached to the surface of the substrates. Soluble polymers form mixtures of a solution of the polymer and the insoluble polymer-coated substrate which may be suspended in the solution if it is finely divided. If the polymer in solution is the same as or is compatible with the polymers bound onto the surface of the substrate, the articles which are cast from the solution suspension will contain polymer tightly bound to the substrate via the polymer coating.

The composite of polymer and substrate can be recovered from the polymerization mixture using standard procedures. Composites of soluble polymers nucleated about substrates can be filtered to recover the insolble derivatized fraction. Composites which are powders, gels, or films of insoluble polymers nucleated about derivatized substrates can be extracted with a solvent which is unreactive with the polymer and the substrate. For example, in those embodiments of this invention in which the product is a continuous film of polymer having finely divided electroactive material therein or coated onto a grid of some material, such as nickel, steel, stainless steel, graphite, and the like, the film composite, is removed from the polymerization mixture, extracted with an inert solvent, and thereafter used in battery construction as an electrode in accordance with conventional procedures. Illustrative of such procedures are those described in Kaner and MacDiarmid, J Chem. Soc. Faraday Trans, 1, 80, 2109 (1984) and Nagatomo et al., J Electrochem. Soc., 132, 1380 (1985).

The organic solvents which may be included in the electrolyte of the batteries of the present invention may vary widely and can be organic solvents normally used in batteries. Preferably, these solvents should be electrochemically inert to oxidation and reduction during use while simultaneously being capable of dissolving the desired alkali metal salt and providing ionic conductivity equal to or in excess of $10^{-4}$ S/cm. Examples of such useful organic solvents include propylene carbonate, ethylene carbonate, sulfolane, methyl sulfolane, dimethyl sulfolane, 3-methyl-2-oxazolidone, alkane sultones, e.g., propane sultone, butane sultone (the use of sultones as electrolyte compositions is the subject of a related, commonly-assigned U.S. patent application Serial No. 556,717, – now US-A 4 528 254 – and the use of sultones for coatings on polymer anodes is the subject of US-A 4 472 489), dimethyl sulfoxide (DMSO), dimethyl sulfite, tetrahydrofuran (THF), 2-methyltetrahydrofuran (2-MTHF), dioxane, dioxolane, 1,2-dimethoxyethane (DME), diemthoxymethane, diglymes, glymes, anisole, nitriles, (e.g., proprionitrile, butyronitrile, acetonitrile, benzonitrile), dichloromethane, tetraethylsulfamide, aromatic hydrocarbons, e.g., toluene, benzene, organo phosphorus compounds, e.g., hexamethylene phosphoramide, and trimethyl phosphate. Mixtures of such available organic solvents may also be used, such as mixtures of sulfolane and acetonitrile, or mixtures of propylene carbonate and dimethoxyethane.

The organic solvents chosen for use in any particular situation will, of course, depend upon many factors such as the precise electrolyte composition used and the voltage range desired, as well as the choice of cathode and other components of the battery used. A particularly important consideration in choosing a solvent is whether the conjugated backbone polymer employed is subject to attack by the solvent. In the preferred embodiments of the invention when uncoated anodes are employed, ether-type solvents such as tetrahydrofuran, dimethoxyethane, diglyme, 2-methyltetrahydrofuran and mixtures thereof are employed because these solvents are generally not reactive with conjugated backbone polymers, when in their neutral or reduced forms. Essentially, any of the above-listed solvents can be used with anodes coated with solvent-resistant coatings; however, preferred for use with coated anodes are propylene carbonate, ethylene carbonate, sulfolane, 3-methylsulfolane and mixtures of any of the above-listed solvents, which mixtures may also include glymes, particularly dimethoxyethane.

Salts for use in the electrolyte of the battery of this invention are of the formula:

MA

wherein:

M is an alkali metal; and

A is a species which is anionic in the electrolyte and stable under operational conditions. Preferred alkali metals are lithium, sodium and potassium, and the particularly preferred alkali metals are lithium and sodium. Suitable anionic species include $I^-$, $Br^-$, $Cl^-$, $ClO_4^-$, $PF_6^-$, $AsF_6^-$, $SO_3CF_3^-$, $BF_4^-$, $BCl_4^-$, $AlCl_4^-$, alkylborates, such as $B(CH_3)_4^-$, arylborates, such as $B(C_6H_5)_4^-$, (the use of such borate salts with conjugated polymers being the subject of commonly assigned U.S. Patent Application Serial No. 556,721 – now US-A 4 522 901 –, $POF_4^-$, $CN^-$, $SCN^-$, $OCN^-$, $CF_3CO_2^-$ (trifluoroacetate), $C_6H_5CO_2^-$ (benzoate), $CH_3C_6H_4SO_3^-$ (tosylate), $SiF_6^=$, $HSO_4^-$, and the like. Preferred anions are alkylborates, arylborates, or alkylarylborates, $PF_6^-$, $ClO_4^-$, halide ions, $SO_3CF_3^-$, and $BF_4^-$, and particularly preferred anions are alkylborates, arylborates, alkylarylborates and $PF_6^-$.

Molten salts may also be employed as the electrolyte of the battery of the invention. The use of conjugated polymers as anodes in room-temperature molten salt batteries is described in US-A 4 463 071. Room-temperature molten salts suitable for use in batteries of this invention include alkali metal halide-trialkylimidazolium chloroaluminate, alkali metal halide-dialkylimidazolium chloroaluminate, and alkali metal halide alkyl pyridinium chloroaluminate. Since in many cases the polymers, alloys, and other ion inserting materials of this invention are stable at elevated temperature, intermediate temperature molten salts (M.P.<200°C) such as $NaAlCl_4$ or $KAlCl_4$, are also suitable for use.

Cathodes for use in the practice of this invention are not critical and can be varied widely. Suitable cathodes include a material selected from the group consisting of graphite, intercalation compounds of graphite, high surface area carbons (>200 m²/g), transition-metal chalcogenides, and conjugated backbone polymers which are capable of being oxidized (acceptor-doped). Transition-metal chalcogenides and conjugated backbone polymers are preferred cathode materials.

The transition-metal chalcogenides, suitable as cathode materials useful in this invention, can contain inserted alkali metals and include the transition-metal dichalcogenides such as $TiS_2$ and, among others, those listed on page 392 of "Lithium Batteries" edited by J.P. Gabano (Academic Press, 1983) and in K.M. Abraham, Solid State Ionics, vol. 7, pp. 199-212 (1982). These include (with approximate open circuit potentials measured in various organic electrolytes when fully charged or devoid of inserted cations):

| | |
|---|---|
| $Na_xTiS_2$ | 2.1V versus $Na/Na^+$ |
| $Na_xNbS_2Cl_2$ | 2.2V versus $Na/Na^+$ |
| $Li_xMoS_2$ | 2.3V versus $Li/LI^+$ |
| $Li_xFe_{0.25}V_{0.075}S_2$ | 2.4V versus $Li/Li^+$ |
| $Li_xTiS_2$ | 2.5V versus $Li/Li^+$ |
| $Li_xMoS_3$(amorphous) | 2.5V versus $Li/Li^+$ |
| $Na_xCr_{0.5}S_2$ | |
| $Na_xWO_{3-y}$ | 2.6V versus $Na/Na^+$ |
| $Na_xMoS_3$(amorphous) | 2.7V versus $Na/Na^+$ |
| $Na_xTaS_2$ | 2.7V versus $Na/Na^+$ |
| $K_xWO_{3-y}$ | |
| $Li_xMoO_3$ | 2.8V versus $Li/Li^+$ |
| $Li_xV_6O_{13}$ | 2.9 versus $Li/Li^+$ |
| $Li_xCr_{0.5}V_{0.5}S_2$ | 2.9V versus $Li/Li^+$ |
| $Li_xW_{0.2}V_{2.8}O_7$ | 3.0V versus $Li/Li^+$ |
| $Li_xCr_3O_8$ | 3.6V versus $Li/Li^+$ |
| $Na_xCoO_2$ | 3.7V versus $Na/Na^+$ |
| $Li_xCoO_2$ | 4.7V versus $Li/Li^+$ |

Suitable polymer cathodes include oxidized polyacetylene, poly(p-phenylene), polyacenes, poly(phenylene vinylene), polyazulene, polynaphthalene, poly(phenylene sulfide), poly(phenylene oxide), polyphenothiazine, polyaniline, polypyrrole, polythiophene, polythianthrene and substituted versions of the above. Such polymers may be coated by reaction, when oxidized, with pyrroles, thiophenes, azulenes, oxiranes, anilines or furans, as described in US-A 4 472 987.

The secondary battery of this invention can be charged and discharged in accordance with the procedure described in US-A 4 321 114. Such procedures are well known to those of skill in the art and will not be described herein in any great detail.

The following specific examples are presented to more particularly illustrate the invention and are not to be construed as limitations therein.

## EXAMPLE 1

Polyacetylene (PA) powder (prepared from a catalyst of triethyl aluminum and tetrabutoxy titanium which was kept wet in toluene in a refrigerator at -40°C in an argon-filled dry box before use) was mixed with aluminum (Al) powder (-40 + 325 mesh) (44 to 420 μm) using a mortar and pestle. The mixture was then pressed onto expanded Ni metal in a 1/2 inch (1.27 cm) diameter stainless steel die under pressures in the range of 5,000 to 75,000 psi (34,470 to 517,050 kPa). The weights of Al and PA were .065g and .015g, respectively. This electrode was dried under vacuum before being assembled into a test cell with a lithium counter electrode, a Celgard™ separator, and $LiPF_6$ in tetrahydrofuran (THF) electrolyte solution. The OCV of the lithium insertion polymer electrode was 1.895V vs. $Li/Li^+$ reference. The initial discharge of the cell showed a voltage behavior characteristic of PA down to a potential of 0.3V vs. $Li/Li^+$. After reaching 0.3V, the cell voltage remained flat indicating the formation of the $Li_xAl$ alloy. The performance of the cell is summarized in the following Table 1 where the discharge capacity was arbitrarily set at the various values given in the second column.

## TABLE 1

| Cycle | Discharge Capacity, mAh (rate: 1mA/cm²) | Charge Capacity, mAh (rate: 0.5mA/cm²) | Coulombic Efficiency, % |
|-------|------------------------------|------------------------------|------------------|
| 1 | 3.42 | 2.52 | 73.6 |
| 2 | 19.80 | 19.69 | 99.5 |
| 3 | 45.85 | 44.60 | 97.3 |
| 4 | 11.90 | 10.96 | 92.1 |

## EXAMPLE II

PA on an Al electrode was prepared by polymerizing PA by the Shirakawa technique (Polymer Journal, Vol. 2 No. 2, pp 231-244 (1971)) on expanded Al metal (wt. 10 mg, diameter 1.0 cm) with a nickel tab welded on as a lead. The PA on Al electrode was assembled into a cell with lithium in $LiBBu_4$ (Bu = Butyl) in THF solution and discharge at a rate of 0.5 mA/cm². The capacity obtained when the voltage reached 0.25V was 9.46 mAh. The capacity of the flat part (0.3 to 0.25V) of the cell voltage vs. time was 8.54 mAh. Assuming the flat part was completely due to Al, the utilization of Al is 86% (i.e., a final composition of $Li_{0.86}Al$). This electrode was then used as an anode in a cell with a $TiS_2$ cathode (capacity 6.9 mAh) with $LiBBu_4$ in THF as the electrolytic solution. This cell was cycled between 2.3 and 1.4V at a rate of 0.5 mA/cm². The cell showed a 3.95 mAh discharge capacity and 3.83 mAh charge capacity (coulombic efficiency = 97%).

## EXAMPLE III

A mixture of 0.4g poly(p-phenylene) (PPP) powder (prepared by the method of Kovacic), J. Am. Chem. Soc. 85: 454-458, (1963), 0.36g LiAl alloy powder (approx. composition: $Li_{0.5}Al$) and 0.14g Shawinigan Black, was blended together under inert atmosphere. Then 0.03g of EPDM (ethylene-propylene-diene-terpolymer) in 4 ml of cyclohexane was added and the mixture was stirred for 1 hour. The resulting paste was brushed onto an expanded metal nickel screen and allowed to dry under argon. The resulting electrode having dimension 2 cm x 2 cm weighed 212 mg (excluding the weight of the nickel screen). A battery was then assembled employing the above electrode in a glass container as the anode (negative plate) and $TiS_2$ as the cathode (positive plate). The cell also contained a lithium reference electrode, and an electrolyte of 1M lithium tetrabutyl borate in 2-methyl-tetrahydrofuran. Since the anode contained lithium originally present in the LiAl alloy, the anode initially displayed a voltage of 0.4V vs $Li/Li^+$, and the cell could be considered partially charged. More lithium was added to the cell by passing 130 C between the lithium reference and the $TiS_2$ electrode. The cell was then completely discharged during which the original lithium in the aluminum alloy was removed. The charge passed corresponded to an initial alloy composition of $Li_{0.51}Al$. The cell was slowly cycled (approx. one day per half cycle) by charging by a fixed amount followed by complete discharge. The cell voltage varied between about 2.2V and 1.0V during which the potential and capacity of the anode was monitored. A large flat portion was observed in the curve of the anode potential vs. capacity curve primarily due to the capacity of the Al component. Assigning the flat portion entirely to aluminum and the varying portion entirely to PPP implies that the composition changes in the anode between 0.2V and 1.0V vs. $Li/Li^+$ are equivalent to $Li_{0.66}Al$ Al and $[(C_6H_4)^-_{.25}Li^+_{.25}]_x$ $C_6H_4$ x. The capacity of the electrode on a weight basis (excluding grid) was 0.24 Ah/g or 12.6 $mAh/cm^2$. The cell was cycled six times over a 2 week period without evidencing any loss of this capacity.

EXAMPLE IV

A. An aluminum-polyacetylene composite film was formed by the polymerization of acetylene gas in a vigorously stirred slurry of surface derivatized aluminum powder in a dilute solution of $Ti(O-nBu)_4/AlEt_3$ (1:8) in toluene at -78°C, using a modification of the procedure described in by H. Shirakawa and S. Ike-da, Polym. J., 2, 231 (1971) and J. Hocker (Bayer) US-A 4 408 207 to produce a suspension of polyacetylene powder. Aluminum spheres ca. 20 µm in diameter were heated to 465°C in vacuo for 16 hours, stirred in 10% $TiCl_4$ in cyclohexane at 18°C for 16 hours, washed three times in fresh cyclohexane and vacuum dried to bond a component of an acetylene polymerization catalyst (distilled $TiCl_4$ is a polymeriza-tion catalyst; see Kambara, Katano & Hosoe, J. Chem. Soc. Japan, Ind. Chem., 65, 720 (1962)) to the aluminum spheres via their oxide layer forming the derivatized aluminum spheres. A 500 mL 3-necked reactor equipped with a mechanical stirrer was charged with 2g of derivatized Al powder, 50 mL toluene, 0.34 mL $AlEt_3$, and 0.1 mL $Ti(O-nBu)_4$ under a constant flow of dry nitrogen. The reactor was cooled to -78°C and vigorous stirring was established before acetylene gas was added to the $N_2$ flow to make a 1:1 mixture of gases. Polymer particles, which were in part nucleated about the derivatized Al powder, were formed immediately. After ca. 10 min., the stirring causes these particles to be aggregated on the reactor wall forming a smooth film. Scanning electron micrographs indicate a uniform distribution of particles through the film thickness as well as intimate contact between Al metal and polymers fibrils.

B. A 1.5-$cm^2$ film weighing 30 mg and having a gross composition of $(CHAl_{1.5})_x$ prepared as in Step A. Step A was electrochemically reduced and reoxidized in an electrolyte of IM $LiBBu_4/THF$ versus a lithi-um metal counter electrode. During the constant current cycle at 0.33 $mA/cm^2$, the composition of the electrode varied from $CHAl_{1.5}$ to $Li_{0.6}CHAl_{1.5}$ and back to $Li_{0.07}CHAl_{1.5}$ corresponding to a utilization of about 6 $mAh/cm^2$ or 380 mAh/g. The initial stage of reduction to $Li_{0.12}CHAl_{1.5}$ exhibited a sloping voltage vs. charge associated with the n-doping of polyacetylene to 12 mole percent or $Li_{0.12}CH$. The remainder of the reduction process took place at a nearly constant voltage of .28V and is attributed to the alloying of Li with Al to yield a Li distribution of $Li_{0.12}CH(Li_{0.32}Al)_{1.5}$. The reoxidation proceeded at ca. 0.48V until the composition was again $Li_{0.12}CHAl_{1.5}$ at which point voltage began to increase as lithium was removed from the polyacetylene. A second reduction was allowed to proceed until a lower voltage limit of 0.2V was reached, at which point, the electrode composition was consistent with 100% Li alloying of the aluminum and 14% doping of the polyacetylene or $Li_{0.14}CH$ $(Li_{1.0}Al)_{1.5}$, a utilization equivalent to about 675 mAh/g.

EXAMPLE V

A. An aluminum-polyacetylene composite was formed by the polymerization of acetylene gas in a stirred slurry of powdered Li/Al alloy in a dilute solution of $Ti(O-nBu)_4/AlEt_3$ (1:4) in toluene at -78°C. Metallurgically prepared $Li_{1.0}Al$ alloy was pulverized in a ball mill for 16 hours. A 150 mL reactor was charged with 1g of the powdered alloy, 50 mL of toluene, 0.17 mL of $AlEt_3$ and finally 0.10 mL of $Ti(O-nBu)_4$ causing the powder to darken. After chilling to -78°C and degassing the mixture, ca. 0.5 atm. of acetylene was introduced. Since the stirring was slow and insufficient to cause powder formation, a polymer film formed at the top of the catalyst pool and incorporated some of the powdered alloy. After 14 hours, the film was washed in THF and dried. The resulting copper-colored film had a room temperature conduc-tivity of 80 $Scm^{-1}$ and an open circuit voltage vs. Li of 0.76V consistent with polyacetylene n-doped to ca. 7% with $Li^+$ as the counterion.

B. A 1.0-$cm^2$ film weighing 16.5 mg and having an initial composition of $Li_{0.07}CHAl_{0.07}$ prepared as in Step A was electrochemically reduced and reoxidized in an electrolyte of 1M $LiBBU_4/THF$ versus a Li metal counter electrode after first stripping away the original Li content. During the first cycle at 0.5 $mA/cm^2$ between voltage limits of 2.5 and 0.2V, the electrode composition varied from $CHAl_{0.07}$ to $Li_{0.19}CHAL_{0.07}$ and back to $CHAl_{0.07}$. The initial stage of reduction to $Li_{0.12}CHAl_{0.07}$ exhibited the sloping voltage vs. charge associated with n-doping polyacetylene to 12% or $Li_{0.12}CH$. The remainder of the reduction process took place at a nearly constant voltage of 0.3V attributed to the alloying of Li with Al to yield a Li distribution of $Li_{0.12}CH(LiAl)_{0.07}$. The reoxidation proceeded at 0.45V until the composition was again $Li_{0.12}CHAl_{0.07}$ at which point, the lithium content was exhausted and the polyacetylene began to un-dope. An additional 29 cycles between 0.2 and 1.5V exhibited the same voltage characteristics and 100% coulomb efficiency throughout. The utilization ranged from 4.4 $mAh/cm^2$ on the fifth cycle to 4.1 $mAh/cm^2$ on the fifteenth cycle to 3.8 $mAh/cm^2$ on the thirtieth cycle. The amount of Li cycled on the last cycle between the voltage limits of 0.2 and 1.5V was 83% of that observed on the first cycle within the same voltage range.

## EXAMPLE VI

A. An aluminum-polyacetylene composite was prepared by the polymerization of acetylene in a rapidly spinning cylindrical reactor (100 mm I.D. x 120 mm) containing 20g derivatized Al powder (50-1000 um), 35 mL of toluene, 3.5 mL triethyl aluminum, 2.0 mL of titanium tetrabutoxide, and a derivatized cylinder of expanded nickel screen (314 mm x 120 mm) fitted closely to the inside wall of the reactor. After chilling to -79°C and degassing the catalyst mixture, the reactor was rotated about its axis such that the aluminum/catalyst slurry was uniformly distributed on the reactor wall completely immersing the nickel screen. Both the Al powder and the nickel screen had been dried in vacuo at 450°C and reacted with $TiCl_4$ as in Example IV. A pressure of 500 torr (66.5 kPa) of $C_2H_2$ was maintained for 3 hours which allowed the polymer to form throughout the volume of the catalyst-Al slurry, thereby encasing both the Al powder and the nickel screen. After repeated THF washes, two 3.5 cm² samples each weighing ca. 0.22g (0.025g $(CH)_x$, 0.055g Ni, 0.140g Al) were reduced by reaction with a 0.1M solution of sodium naphthalide in THF, washed again in THF, and exposed to 400 torr (53.2 kPa) of ethylene oxide for 1/2 hour to produce poly(ethylene oxide) at the polyacetylene surfaces (US-A 4 472 487). Following a final THF wash to remove unbonded poly(ethylene oxide), the samples were employed as anodes in the battery cell described in Section B, below.

B. A battery cell having an anode comprised of aluminum powder-polyacetylene $(CHAl_n)_x$ composite prepared as in Step A which had been surface modified, lithium cobalt dioxide cathode, and an electrolyte of lithium perchlorate in propylene carbonate was charged and deeply discharged 36 times at 1.4 mA/cm² of anode (2.8 mA/cm² based on one side) in the voltage range of 3.0V to 4.1V prior to cycling the cell, consisting of two 3.5 cm² plates of $(CHAl_n)_x$ and three plates of $LiCoO_2$ and having a volume of 1.6 cm³, delivered 36 mA at 3.6V and 120 mA at 2.8V. The amount of charge released per cycle could be held at ca. 50 mAh but not without gradually increasing the upper voltage limit from 3.9 to 4.1V. The onset of the 20mA discharge was at ca. 3.85V and sloped gradually to 3.5V before turning down to the cut-off voltage; the average value of the discharge voltage was ca. 3.7V. The coulomb efficiency remained between 98 and 100% throughout the 36 cycles. The composition of the composite ranged from an initial value of $(CHAl_2)_x$ to ca. $Li_{0.14}CH(Li_{0.15}Al)_2$ when the cell was charged and back to ca. $Li_{0.07}CHAl_2$ with each cycle. Raising the upper voltage limit was necessary to access more of the Li stored in the $LiCoO_2$ cathodes because it was not being restored fully from the composite anodes during recharge. This was presumably due to shedding of the large (45-2000 mm) Al particles occurring during the alloying process and the consequent isolation of some of the Li-loaded fragments.

## EXAMPLE VII

In a three neck round bottom flask, 0.356g of aluminum powder and 6.0g of molybdenum (VI) tetrachloride oxide were combined under argon. Using a syringe, 10g of benzene were added and the mixture was stirred under argon for 120 hours at room temperature.

The resulting poly(p-phenylene) Al composite was washed repeatedly with benzene, acetonitrile, water, and acetone and dried under vacuum. Infrared spectra showed absorption bands characteristic of poly(p-phenylene).

An electrode was fashioned by pressing a mixture of 77% poly(p-phenylene) Al composite, 13% carbon black, and 10% binder onto a nickel grid at 1000hg/cm² in a rectangular press. The electrode was then removed and heat set at 160°C.

After low molecular weight oligomers were extracted, this electrode was incorporated into a half cell consisting of a lithium reference and counter electrode and 0.5M $LiBBu_4$ in THF as the electrolyte. The cell was cycled between 1.1V and 0.1V with respect to the lithium reference. The capacity was 575C per gram of composite of which 345C were due to Li insertion into the aluminum and 230C were due to Li insertion into the poly(p-phenylene). The average coulombic efficiency over twelve cycles was 98% and there was no loss in capacity with cycling.

## EXAMPLE VIII

To prepare Na-Pb alloy metallurgically, proper amounts of Na and Pb were placed in a stainless steel container and heated at a temperature about 510 ± 10°C in inert atmosphere or under vacuum for a few hours and then quenched to room temperatures. the alloy was then pulverized before used. Na-Pb alloy of the following composition $NaPb_3$, $Na_5Pb_2$ and $Na_{15}Pb_4$ were prepared using the method described as above. Their electrochemical potentials relative to Na were measured using electrometer in the appropriate electrolyte solutions containing sodium ions and listed in Table 1 as follows:

## TABLE 1

| Composition | Potential (vs Na/Na+), V |
|---|---|
| $NaPb_3$ | 0.51 |
| $NaPb$ | 0.37 |
| $Na_5Pb_2$ | 0.183 |
| $Na_{15}Pb_4$ | 0.12 |

EXAMPLE IX

Metallurgically formed Na-Pb alloy powder of the composition $Na_{15}Pb_4$ (32 mg) was pressed onto the expanded nickel metal and used as an electrode. The potential of this electrode was measured while stripping 83% of the Na in the $Na_{15}Pb_4$ alloy away from the electrode. The potential vs the amount of sodium stripped from the electrode was plotted. Several potential plateaus were observed from the plot. This indicated that $Na_{15}Pb_4$ and other binary alloys formed during the stripping procedure corresponded well with the potentials measure in Example 1 and with their respective compositions. Less than 100% Na stripping from the alloy was due to the loss alloy resulted from the volume change.

EXAMPLE X

Sodium alloy can also be formed elecrochemically by plating Na onto Pb foil. By plating Na on Pb foil at a current density of 50 micramp /cm², Na-Pb alloy of various compositions were shown as several potential plateaus. The potential of these plateaus: 0.5, 0.34, 0.17 and 0.12V corresponded well with the values measured in Example 1.

EXAMPLE XI

Na ternary alloy containing Pb and Sn was prepared by heating the proper amounts of Na, Pb and Sn in a stainless steel crucible in an inert atmosphere or under vacuum at a temperature about 510 ± 10°C for few hours and then quenching to room temperatures. The resulting ternary alloy had the following composition $NaPb_{.26}Sn_{.74}$ and a potential of .25 vs Na/Na+.

EXAMPLE XII

A Na alloy electrode was prepared by mixing the $NaPb_{.26}Sn_{.74}$ alloy of Example XI in powdered form with 10 weight percent of polyphenylene (PPP) and 10 weight percent of polypropylene binder. The mixture was then pressed onto expanded nickel metal and heated at 160°C for 10 to 20 minutes under vacuum or in an inert atmosphere.

A cell was constructed which consisted of the anode (68 mg on an area of 0.6 x 2.4 cm²) whose preparation is described above and a $Na_xCoO_2$ cathode was assembled using glass filter paper to separate the two electrodes. The electrolyte solution used was 1.25 M $NaPF_6$ in DME. Before cycling, 3.77 mAh capacity was added to the anode. This amount of charge was obtained by charging the $Na_xCoO_2$ cathode and plating sodium from the auxilliary sodium electrode. The final potential of this electrode was about .10V.

The cell was then cycled at a rate of 0.5 mA/cm² in the voltage range of 3.2 to 2.2V ($Na_xCoO_2$ vs alloy anode) for 22 cycles. The cell was further cycled at a rate of 1.0 mA/cm² in the same voltage range from the 23rd to the 87th cycle. The potential profile of the anode (vs Na/Na+) vs capacity at selected cycles was plotted. The plot indicated that the discharge capacity of the cell decreased from 4.39 mAh at the first cycle to 3.59 mAh at the 21st cycle, 3.35 mAh at the 24th cycle, 3.07 mAh at the 50th cycle and 2.84 mAh at the 87th cycle. The coulombic efficiency of each cycle was varied from 97 to 99%.

**Claims**

1. A battery comprising:
(a) an electrolyte comprising an alkali-metal salt,
(b) a cathode; and
(c) an anode comprising an anode active material;
characterized in that the anode active material is a mixture of one or more conjugated backbone polymers and one or more electroactive materials selected from metals which alloy with alkali metals and transition metal chalcogenides.

2. A battery according to claim 1 characterized in that said polymer is polyacetylene or poly(p-phenylene).

3. A battery according to claim 1 or 2 characterized in that said alkali-metal salt of said electrolyte is a lithium salt, sodium salt or mixtures thereof, and said metal is aluminium, lead, tin or a tin-lead alloy.

4. A battery according to claim 3 characterized in that said metal salt is a lithium salt and said metal is aluminium.

5. A battery according to claim 3 characterized in that said metal salt is a sodium salt and said metal is lead, tin or a lead-tin alloy.

6. A battery according to any one of claims 1 to 5 characterized in that the electrolyte comprises the alkali metal salt and an organic solvent.

7. A battery according to any one of claims 1 to 5 characterized in that the electrolyte is a molten alkali metal salt.

8. A process of fabricating a battery anode which comprises an intimate mixture of a finely divided electroactive material selected from metals which alloy with alkali metals, and transition metal chalcogenides in a matrix composed of a conjugated backbone polymer, said method comprising the steps of:

(a) derivatizing the surfaces of the finely divided electroaotive material with a catalyst for conjugated backbone polymers or a catalyst for polymers which can be converted into a conjugated backbone polymer;

(b) dispersing said derivatized electroactive material in a gas, suspension or solution of one or more monomers or other precursors for said polymer and polymerizing said monomers or other precursor in the presence of said finely divided electroactive material having polymer coated to the surface thereof;

(c) polymerizing additional monomer, monomers or other precursors in the presence of polymer coated electroactive material to provide a predetermined polymer to electroactive material weight ratio; and

(d) recovering said polymer coated electroactive material or a combination of polymer and polymer coated electroactive material from said solution or suspension and fabricating same into a cohesive solid.

9. A method according to claim 8 characterized in that said monomers or other precursors are those which can be polymerized into poly(p-phenylene) and polyacetylene.

10. A process according to claim 8 or 9 said substrate is aluminium, lead, tin or a tin/lead alloy.

**Patentansprüche**

1. Batterie mit
(a) einem Elektrolyt mit einem Alkalimetallsalz,
(b) einer Kathode und
(c) einer Anode mit einer aktiven Anodenmasse,
dadurch gekennzeichnet, daß die aktive Anodenmasse eine Mischung aus einem oder mehreren konjugierten Stützpolymeren und einem oder mehreren aus Metallen, welche mit Alkalimetallen und Übergangsmetallchalcogeniden legieren, ausgewählten elektroaktiven Massen ist.

2. Batterie nach Anspruch 1, dadurch gekennzeichnet, daß das Polymer Polyacetylen oder Poly(p-phenylen) ist.

3. Batterie nach Anspruch 1 oder 2, dadurch gekennzeichnet, daß das Alkalimetallsalz des Elektrolyten ein Lithiumsalz, Natriumsalz oder eine Mischung davon ist und das Metall Aluminium, Blei, Zinn oder eine Zinn-Blei-Legierung ist.

4. Batterie nach Anspruch 3, dadurch gekennzeichnet, daß das Metallsalz ein Lithiumsalz und das Metall Aluminium sind.

5. Batterie nach Anspruch 3, dadurch gekennzeichnet, daß das Metallsalz ein Natriumsalz und das Metall Blei, Zinn oder eine Blei-Zinn-Legierung sind.

6. Batterie nach einem der Ansprüche 1 bis 5, dadurch gekennzeichnet, daß der Elektrolyt das Alkalimetallsalz und ein organisches Lösungsmittel enthält.

7. Battiere nach einem der Ansprüche 1 bis 5, dadurch gekennzeichnet, daß der Elektrolyt ein geschmolzenes Alkalimetallsalz ist.

8. Verfahren zur Fertigung einer Batterieanode, welches eine innige Mischung einer feinverteilten aus Metallen, welche mit Alkalimetallen und Übergangsmetallchalcogeniden in einer aus einem konjugierten Stützpolymer zusammengesetzten Matrix legieren, ausgewählten elektroaktiven Masse umfaßt, wobei das Verfahren die Stufen aufweist

(a) Derivatisieren der Oberflächen der feinverteilten elektroaktiven Masse mit einem Katalysator für konjugierte Stützpolymere oder einem Katalysator für Polymere, welche in ein konjugiertes Stützpolymer umgewandelt werden können,

(b) Dispergieren der derivatisierten elektroaktiven Masse in einem Gas, einer Suspension oder Lösung eines oder mehrerer Monomerer oder anderer Vorläufer für das Polymer, und polymerisieren des Monomers oder der anderen Vorläufer in Gegenwart der feinverteilten elektroaktiven Masse, auf deren Oberfläche das Polymer aufgebracht ist,

(c) Polymerisieren eines zusätzlichen Monomers, zusätzlicher Monomerer oder andere Vorläufer in Gegenwart der polymerbeschichteten elektroaktiven Masse, um ein vorherbestimmtes Gewichtsverhältnis von Polymer zu elektroaktiver Masse bereitzustellen, und

(d) Wiedergewinnung der polymerbeschichteten elektroaktiven Masse oder einer Kombination aus Polymer und polymerbeschichteter elektroaktiver Masse aus der Lösung oder Suspension und Fertigung derselben in einen kohäsiven Feststoff.

9. Verfahren nach Anspruch 8, dadurch gekennzeichnet, daß die Monomeren oder anderen Vorläufer solche sind, welche in Poly(p-phenylen) und Polyacetylen polymerisiert werden können.

10. Verfahren nach Anspruch 8 oder 9, dadurch gekennzeichnet, daß das Substrat Aluminium, Blei, Zinn oder eine Zinn-Blei-Legierung ist.

## Revendications

1- Batterie, comprenant :

(a) un électrolyte comportant un sel de métal alcalin,

(b) une cathode; et

(c) une anode comprenant un matériau actif d'anode;

caractérisée en ce que le matériau actif d'anode est un mélange d'un ou de plusieurs polymères à squelette conjugué et d'un ou de plusieurs matériaux électroactifs choisis parmi des métaux qui forment des alliages avec des métaux alcalins et des chalcogénures de métaux de transition.

2 - Batterie selon la revendication 1, caractérisée en ce que le polymère est le polyacétylène ou le poly(p-phénylène).

3 - Batterie selon la revendication 1 ou 2, caractérisée en ce que le sel de métal alcalin de l'électrolyte est un sel de lithium, un sel de sodium ou leurs mélanges, et le métal est l'aluminium, le plomb, l'étain ou un alliage étain-plomb.

4 - Batterie selon la revendication 3, caractérisée en ce que le sel de métal est un sel de lithium et le métal est l'aluminium.

5 - Batterie selon la revendication 3, caractérisée en ce que le sel de métal est un sel de sodium et le métal est le plomb, l'étain ou un alliage étain-plomb.

6 - Batterie selon l'une quelconque des revendications 1 à 5, caractérisée en ce que l'électrolyte comprend le sel de métal alcalin et un solvant organique.

7 - Batterie selon l'une quelconque des revendications 1 à 5, caractérisée en ce que l'électrolyte est un sel de métal alcalin fondu.

8 - Procédé de fabrication d'une anode de batterie qui comprend un mélange intime d'un matériau électroactif finement divisé choisi parmi des métaux qui forment des alliages avec des métaux alcalins et des chalcogénures de métaux de transition dans une matrice composée d'un polymère à squelette conjugué, ce procédé comprenant les étapes de :

(a) traitement des surfaces du matériau électroactif finement divisé avec un catalyseur pour polymères à squelette conjugué ou un catalyseur pour polymères pouvant être transformés en un polymère à squelette conjugué, de manière à former un dérivé;

(b) dispersion du matériau électroactif traité pour former un dérivé dans un gaz, une suspension ou une solution d'un ou plusieurs monomères ou autres précurseurs du polymère et polymérisation des monomères ou autres précurseurs en présence du matériau électroactif finement divisé dont la surface est revêtue de polymère;

(c) polymérisation de monomère, monomères ou autres précurseurs supplémentaire(s) en présente de matériau électroactif revêtu de polymère pour obtenir un rapport pondéral prédéterminé du polymère au matériau électroactif; et

d) récupération du matériau électroactif revêtu de polymère ou d'une combinaison de polymère et de matériau électroactif revêtu de polymère à partir de la solution ou de la suspension et sa transformation en un solide tenace.

9 - Procédé selon la revendication 8, caractérisé en ce que les monomères ou autres précurseurs sont des monomères ou autres précurseurs que l'on peut polymériser en poly(p-phénylène) et en polyacétylène.

10 - Procédé selon la revendication 8 ou 9, caractérisé en ce que le substrat est en aluminium, plomb, étain ou en un alliage étain/plomb.